# EUROPÄISCHE PATENTSCHRIFT

(11) **EP 1 616 645 B1**
(45) Veröffentlichungstag und Bekanntmachung des Hinweises auf die Patenterteilung: **14.02.2007**
(21) Anmeldenummer: 05104300.8
(22) Anmeldetag: 20.05.2005
(51) Int. Cl.: B23B 5/26, B23C 5/02

(54) **Wendeschneideinsatz zum Drehen**
Indexable cutting insert for turning
Plaquette de coupe amovible pour tournage

(30) Priorität: 01.06.2004 DE 102004026601
(43) Veröffentlichungstag der Anmeldung: 18.01.2006
(73) Patentinhaber: Sandvik Intellectual Property AB, 811 81 Sandviken (SE)
(72) Erfinder: Scherbarth, Stefan, 41462 Neuss (DE)
(74) Vertreter: Weber, Dieter

(56) Entgegenhaltungen:
- EP-A- 0 313 534
- DE-A1- 2 610 097
- US-A1- 2001 033 779

## Beschreibung

Die vorliegende Erfindung betrifft einen Wendeschneideinsatz zum Drehen mit einer polygonalen - Grundform, die definiert wird durch eine obere Seite mit polygonalem Umriß, eine hierzu in etwa parallele Unterseite, umlaufende Seitenflächen, welche die Ober- und die Unterseite miteinander verbinden, wobei der Schnitt der Seitenflächen mindestens mit der Oberseite Schneidkanten definiert, die aus Hauptschneidkanten und Nebenschneidkanten bestehen, wobei die im wesentlichen polygonale Umrißform durch eine mindestens dreieckig Grundform definiert wird, die abgeschnittene Eckbereich hat, wobei die Hauptschneidkanten durch die Seiten der Grundform definiert werden und die Nebenschneidkanten durch die abgeschnittenen Ecken definiert werden und mindestens einen konkaven und mindestens einen konvexen Schneidkantenabschnitt aufweisen.

Ein derartiger Wendeschneideinsatz ist z.B. aus EP-A-0 313 534 bekannt.

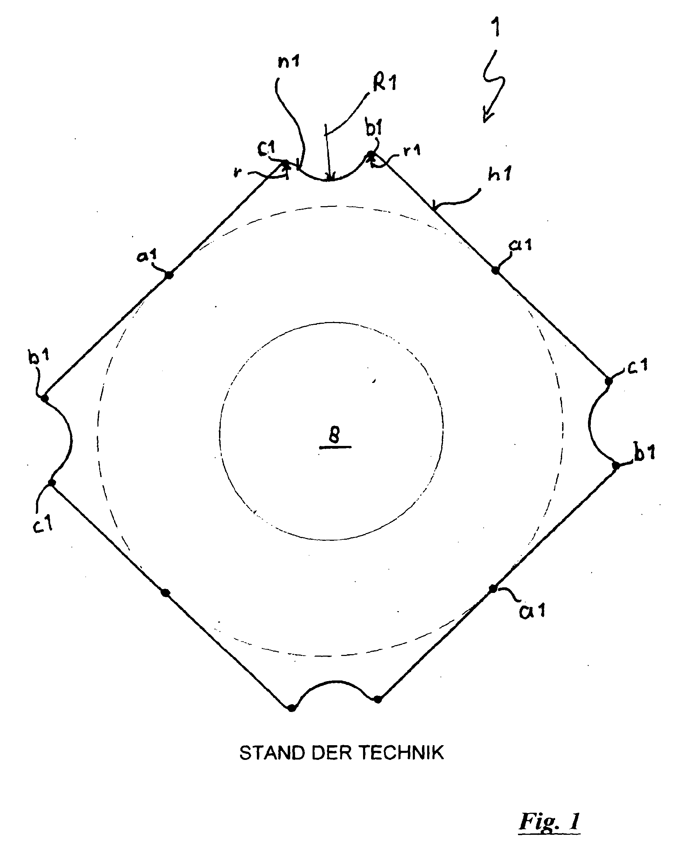

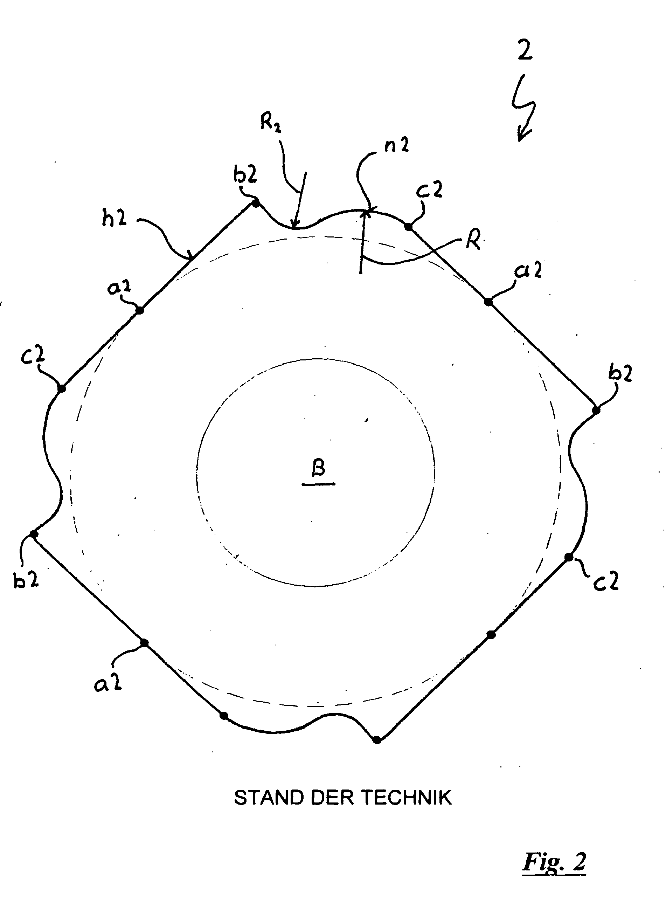

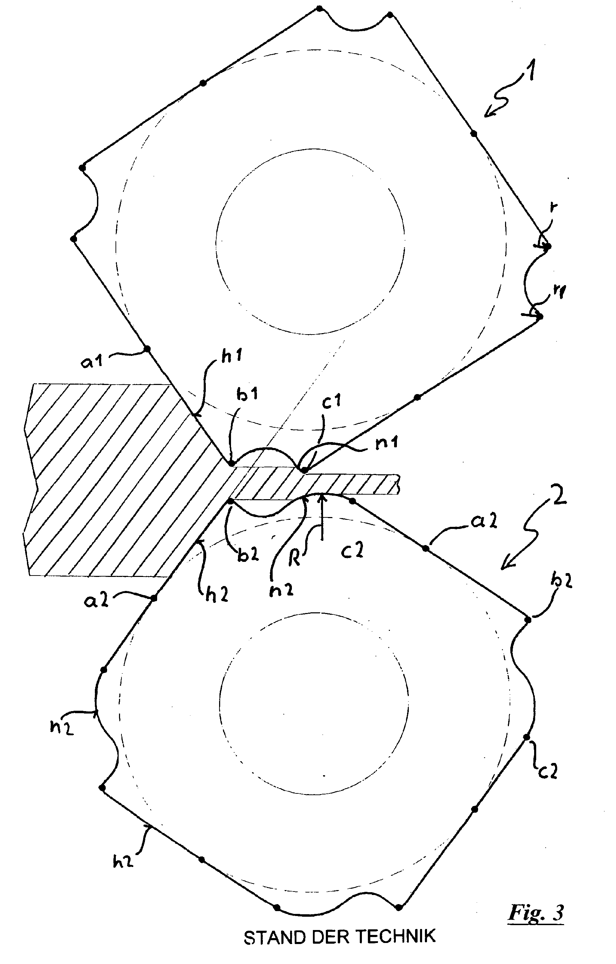

Entsprechende Schneideinsätze sind beispielsweise für das Drehen von rohr-, ring- oder topfförmigen Werkstoffen bekannt. Dabei ist es oftmals notwendig, daß zwei unterschiedliche Wendeschneidplatten für die Außen- und die Innenbearbeitung eines solchen zylindrischen Werkstückes zum Einsatz kommen. Entsprechende, aus dem Stand der Technik bekannte Schneideinsätze sind in den Figuren 1 und 2 der vorliegenden Anmeldung dargestellt. Diese Schneideinsätze nach dem Stand der Technik haben eine quadratische Grundform, wobei Hauptschneidkanten entlang des Übergangs der Seitenflächen zu den Seiten des Quadrates definiert werden, während die abgeschnittenen Eckbereiche Nebenschneidkanten definieren. Ein erster Schneideinsatz, der in Figur 1 dargestellt ist, weist dabei beim Übergang von einer Hauptschneidkante zu der Nebenschneidkante im Eckbereich zunächst einen konvexen Übergang auf, auf welchen ein konkaver Schneidkantenabschnitt folgt, an den wieder ein konvexer Übergang zu der anderen, der Ecke benachbarten Hauptschneidkante erfolgt. Die Nebenschneidkante besteht also im wesentlichen aus zwei konvexen Übergängen zu den Hauptschneidkanten und einem dazwischenliegenden konkaven Schneidkantenabschnitt. Der in Figur 2 dargestellte Schneideinsatz hat im wesentlichen dieselbe Grundstruktur, d.h. eine Hauptschneidkante entlang einer Seite der (quadratischen) polygonalen Grundform und eine Nebenschneidkante in einem abgeschnittenen Eckbereich, wobei diese Nebenschneidkante wieder aus dem konvexen Übergang einer Hauptschneidkante zu einem konkaven Abschnitt der Nebenschneidkante gebildet wird, worauf wieder ein konvexer Übergang zu der anderen benachbarten Hauptschneidkante erfolgt. In diesem Beispiel ist jedoch der Radius des konvexen Übergangs zu der anderen benachbarten Schneidkante wesentlich größer als der Radius des Übergangs von der ersten Hauptschneidkante zu dem konkaven Bereich. Den Zweck deser Ausgestaltung versteht man am besten anhand der Figur 3.

Figur 3 zeigt die beiden in den Figuren 1 und 2 bereits dargestellten Schneideinsätze im Einsatz an der Wand eines hohlzylindrischen Werkstückes. Die Wand des hohlzylindrischen Werkstückes ist hier im Schnitt schraffiert dargestellt, wobei die relativen Abmessungen und insbesondere der zu zerspanende Anteil der Wand nicht maßstabsgetreu dargestellt ist. Bei bestimmten zylindrischen Werkstücken kann es beispielsweise erwünscht sein, daß die Außenwand der hohlzylindrischen Werkstücke eine größere Raumtiefe aufweist als die Innenwand, oder umgekehrt.

Es sei beispielsweise die obere Seite die Außenseite des hohlzylindrischen Werkstückes und die untere Seite in Figur 3 die Innenfläche. Der obere Schneideinsatz bringt die Außenfläche mit der Hauptschneidkante und der Nebenschneidkante auf ihre endgültige Abmessung, wobei das Hauptzerspanungsvolumen durch die Hauptschneidkante geleistet wird, während die Nebenschneidkante eine Schlichtarbeit durchführt. Beim oberen Schneideinsatz wird durch den Schlichtvorgang noch ein relativ dünner Span abgetragen, doch mit dem konvexen Übergang von dem konkaven Schneidkantenabschnitt zur nicht aktiven Hauptschneidkante, der einen relativ kleinen Krümmungsradius hat. Bei dem unteren Schneideinsatz wird ebenfalls die Hauptzerspanungsarbeit durch die Hauptschneidkante geleistet und die Nebenschneidkante führt in ähnlicher Weise eine Schlichtarbeit aus wie der obere Schneideinsatz, in diesem Fall jedoch durch den Übergang vom konkaven Abschnitt der Nebenschneidkante zu einer benachbarten, nicht aktiven Hauptschneidkante entlang eines relativ großen Krümmungsradius R. Damit wird die Innenfläche wesentlich glatter und hat eine wesentlich geringere Rautiefe als die Außenfläche, wie dies auch aufgrund entsprechender Vorgaben gewünscht ist.

Wie man sieht, erfordert die Bearbeitung entsprechender Werkstücke, bei welchen Innenfläche und Außenfläche unterschiedliche Rautiefen aufweisen sollen, notwendigerweise die Verwendung zwei verschiedener Schneideinsatztypen, obwohl die Schneideinsätze ansonsten aus der im wesentlichen identischen quadratischen Grundform hergestellt werden und nur die Eckbereiche entsprechend modifiziert sein müssen. Dabei kann es relativ leicht zu Verwechslungen der für die Innen- und Außenflächen vorgesehenen Schneideinsätze kommen, zumal diese Schneideinsätze in der Praxis nur etwa 1/10 der Größe haben, wie sie in den beiliegenden Figuren dargestellt sind. Die unterschiedlichen Krümmungsradien in den Eckbereichen sind deshalb auch nur bei besonderer Aufmerksamkeit mit bloßem Auge wahrzunehmen.

Dies erfordert dementsprechend eine Lagerhaltung mit zwei verschiedenen Schneideinsätzen, die sorgfältig unterschieden werden müssen und auch bei der Montage bzw. dem Einbau in entsprechende Werkzeuge oder Werkzeughalter müssen die Schneideinsätze sorgfältig unterschieden werden. Hinzu kommt noch, daß von den Hauptschneidkanten jeweils nur ein geringer Teil als aktive Schneidkante Verwendung findet, während der größte Teil der Hauptschneidkante unbenutzt bleibt und der Schneideinsatz nach dreimaligem Wenden (insgesamt vier Einsatzpositionen) verschlissen ist, jedenfalls wenn man unterstellt, daß es sich hier um einseitige Schneideinsätze handelt.

Gegenüber diesem Stand der Technik liegt der vorliegenden Erfindung die Aufgabe zugrunde, einen Schneideinsatz zum Drehen zu schaffen, der eine gleichzeitige Schrupp- und Schlichtbearbeitung mit wahlweise unterschiedlichen Rautiefen ermöglicht.

Diese Aufgabe wird dadurch gelöst, daß die Nebenschneidkante, ausgehend von einem kleinen Übergangsradius r1 am Übergang einer ersten benachbarten Hauptschneidkante den folgenden Verlauf hat:
a) konkav mit einem Radius R₁,
b) konvex mit einem Radius R,
c) konkav mit einem mittleren Radius R₃,
d) konvex mit einem Radius r,
e) konkav mit einem Radius R₂,
und mit einem anschließenden konvexen Übergang zur zweiten Hauptschneidkante mit kleinem Übergangsradius r₂,

In der bevorzugten Ausführungsform gilt außerdem die folgende weitere Randbedingung: R > r, r1, r₂..

Dabei ist anzumerken, daß die für die vorliegende Erfindung wesentlichen und die Rautiefe bestimmenden Radien die Radien R und r sind, und die Radien r1 und r₂ lediglich den leicht abgerundeten Übergang von der Hauptschneidkante zur Nebenschneidkante definieren, der eigentlich auch noch der Hauptschneidkante zugerechnet werden kann, weil mit diesem Übergangs- bzw. Eckbereich von Hauptschneidkante zu Nebenschneidkante die Werkstückoberfläche vor dem Schlichtvorgang e-zeugt wird. die Radien r1 und r2 könnten deshalb für manche Anwendungsbereiche auch größer sein als die Radien r und/oder R. in manchen Fällen könnten die Radien r und R auch gleich bzw. in etwa gleich sein. Dies bietet auf jeden Fall noch den Vorteil einer Erhöhung der effektiv nutzbaren Schneidkantenzahl, wobei eine Verwechselung der Schneideinsätze oder eine Vereinfachung der Lagerhaltung in einem solchen Fall nicht mehr das entscheidende Argument wäre.

Auch der Radius R₃ ist von untergeordneter Bedeutung und muß insbesondere kein fester Radius sein, sondern ist ein irgendwie konkav gearteter Übergang zwischen den beiden konvexen Radien Rund r, der lediglich einen gewissen Abstand zwischen den Schneidkantenabschnitten mit den unterschiedlichen konvexen Radien herstellen soll.

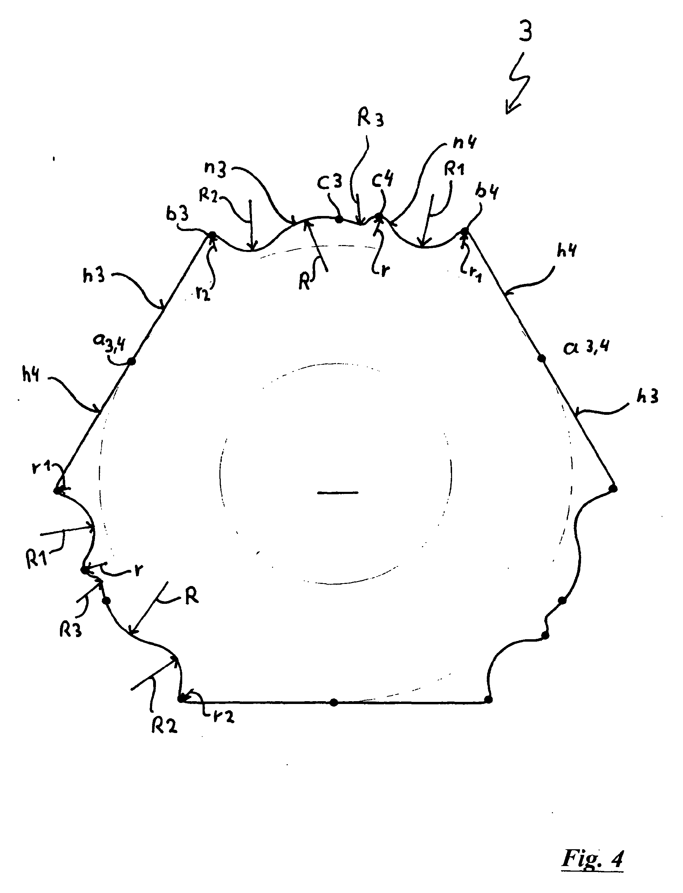

Diese Ausgestaltung ermöglicht es, daß für den Schrupp- und Schlichtvorgang mit (im allgemeinen) unterschiedlichen Rautiefen, welche durch die Art der Nebenschneidkanten definiert werden, ein und derselbe Schneideinsatz zum Einsatz kommen kann, wie man es am leichtesten anhand der Figur 4 nachvollziehen kann. In Figur 4 ist der untere Schneideinsatz so gedreht, daß für den Schlichtvorgang der Abschnitt der Nebenschneidkante mit dem Radius R Verwendung findet, während der konvexe Abschnitt mit dem Radius r aufgrund einer entsprechenden leichten Verkippung des Schneideinsatzes außer Eingriff bleibt. Bei dem darüber dargestellten Schneideinsatz, der gegenüber dem unteren Schneideinsatz um etwa 170° verdreht angeordnet ist, sind die Verhältnisse gerade umgekehrt, so daß dort für den Schlichtvorgang der Nebenschneidkantenabschnitt mit dem Radius r wirksam ist, während der Abschnitt mit dem größeren R außer Eingriff bleibt.

Auf diese Weise kann jede der Schneidecken in zwei verschiedenen Orientierungen verwendet werden und die angrenzenden Hauptschneidkantenabschnitte werden auf beiden Seiten einer Schneidecke für die Grobbearbeitung eingesetzt. Der Schneideinsatz wird damit wesentlich effektiver genutzt und selbst bei einem Schneideinsatz mit nur dreieckiger Grundform kann dieser in insgesamt sechs verschiedenen Orientierungen eingesetzt werden, also sechsfach verwendet werden, wohingegen die aus dem Stand der Technik bekannten Schneideinsätze mit quadratischer Form lediglich viermal in unterschiedlicher Orientierung verwendet werden können. Außerdem hat man den weiteren Vorteil, daß die Schneideinsätze nicht unterschieden zu werden brauchen, da sie untereinander identisch sind und die gewünschten Haupt- und Nebenschneidkanten automatisch durch den Einbau in entsprechende Werkzeuge oder Werkzeughalter in der richtigen Orientierung aufgenommen werden. Der in der Grundform dreieckige Schneideinsatz hat außerdem den Vorteil, daß zwei relativ zueinander um 60° geneigte Seitenflächen als Anlageflächen in einem Schneideinsatzhalter verwendet werden können, was bekanntermaßen eine hohe Positioniergenauigkeit ermöglicht. Darüber hinaus ist es jedoch auch möglich, den entsprechenden Schneideinsatz auch in einer quadratischen Grundform herzustellen, so daß der erfindungsgemäße Schneideinsatz in diesem Fall sogar achtfach, d.h. in acht unterschiedlichen Orientierung, zum Einsatz kommen können.

Dabei ist klar, daß die Angabe der Grundform als Polyeder mit abgeschnittenen Ecken lediglich der Veranschaulichung der geometrischen Form dient, die abwechselnd aus Haupt- und Nebenschneiden gebildet wird, welche relativ zueinander abgewinkelt sind. Anstatt von einer dreieckigen Grundform mit abgeschnittenen Ecken zu sprechen, könnte man also die Grundform ebenso gut als die eines Sechsecks bezeichnen, bei welchem Haupt- und Nebenschneidkanten entlang der aufeinanderfolgenden Seiten des Sechsecks abwechseln. Analoges gilt für die quadratische Grundform die auch als Achteck definiert werden könnte, wobei allerdings in beiden vorgenannten Fällen die Haupt- und Nebenschneidkanten nicht dieselbe Länge aufweisen müssen.

In der bevorzugten Ausführungsform beträgt der Radius R mindestens das Zweifache des Radius r, vorzugsweise mindestens das Dreifache und insbesondere liegt der Radius R im Bereich zwischen 4r und 8r.

Die Übergangsradien, r₂ der Nebenschneidkante zu den beiden benachbarten Hauptschneidschneidkanten können im wesentlichen gleich sein und sind im allgemeinen auch etwas kleiner als der Radius r der Nebenschneidkanten, insbesondere liegen die Radien r1, r₂ im Bereich zwischen 0,2 x r bis 0,8 x r, auch wenn dies nicht zwingend ist und, wie bereits erwähnt, die Radien r1 und r2 für manche Anwendungsfälle auch größer gewählt werden können als der Radius r und sogar größer als der Radius R.

Die konkaven Radien R₁, R₂ sollten im allgemeinen ebenfalls deutlich größer sein als die Übergangsradien r1, r₂, da sie letztlich den Abstand zwischen aktiver Hauptschneidkante und der den Schlichtvorgang durchführenden Nebenschneidkante definieren, die nicht allzu dicht aufeinander folgen sollten, um sich nicht wechselseitig zu beeinflussen. Die genauen Werte der Radien R₁, R₂ sind allerdings weniger kritisch und können in weiten Bereichen variiert werden.

Der konkave Abschnitt zwischen den konvexen Radien R und r muß nicht notwendigerweise einen festen Radius R₃ haben, sondern kann eine irgendwie konkave Ausgestaltung zwischen diesen beiden Radien sein, die lediglich den Abstand zwischen den unterschiedlichen konvexen Abschnitten der Nebenschneidkante herstellen. Auch die übrigen konkaven und konvexen Radien müssen nicht notwendigerweise entlang des gesamten, von ihnen definierten konkaven oder konvexen Abschnittes konstant, wobei allerdings die Herstellung mit im wesentlichen konstanten Radien einfacher und deshalb auch sinnvoll ist.

Im einzelnen liegt in der bevorzugten Ausführungsform der Erfindung der Radius r zwischen 0,1 und 0,6 mm, der Radius R zwischen 0,5 und 3 mm, die Radien R₁, R₂ zwischen 0,4 und 2 mm, der Radius R₃ (im Mittel) zwischen 0,2 und 0,8 mm, wobei es selbstverständlich nicht zwingend erforderlich, ist daß alle vorgenannten Radien immer in den genannten Bereichen liegen und selbstverständlich auch Ausführungsformen der Erfindung denkbar sind, bei denen nur ein Teil der vorgenannten Radien die genannten Bedingungen erfüllt, während die übrigen Radien außerhalb der angegebenen Bereiche liegen.

Wenn man die beiden Übergangsecken von den Hauptschneidkanten zu den Nebenschneidkanten auf beiden Seiten eines Nebenschneidkantenbereichs durch eine gerade Linie verbindet, so sollten in der bevorzugten Ausführungsform der Erfindung die beiden konvexen Schneidkantenabschnitte mit den Radien R und r vom Zentrum des Schneideinsatzes aus gesehen jenseits dieser Verbindungslinie liegen, während die konkaven Bereiche der Nebenschneidkanten mit den Radien R₁ und R₂ innerhalb bzw. diesseits einer solchen Verbindungslinie liegen.

In der bevorzugten Ausführungsform der vorliegenden Erfindung ist die Grundform des Schneideinsatzes die eines gleichseitigen Dreiecks mit abgeschnittenen Ecken, wobei die abgeschnittenen Eckbereiche die Nebenschneidkanten definieren und die verbliebenen Dreiecksseiten die Hauptschneidkanten definieren. Eine solche Form kann im Prinzip auch als ein Sechseck betrachtet werden, wobei allerdings die sechs Seiten eines solchen Sechsecks abwechselnd unterschiedliche Längen haben und auch abwechselnd aus geraden und gekrümmt verlaufenden Schneidkantenabschnitten bestehen.

Im übrigen ist es jedoch nicht kritisch, daß die in der bevorzugten Ausführungsform dargestellten und beschriebenen Hauptschneidkanten exakt geradlinig verlaufen, sie könnten vielmehr ebenso gut auch in einer Draufsicht auf den Schneideinsatz konkav oder konvex gekrümmt verlaufen oder sonstwie strukturiert sein, wobei es lediglich darauf ankommt, daß sie für ihre Hauptaufgabe, nämlich die grobe Zerspanung des Werkstoffes, geeignet ausgestaltet sind.

Es versteht sich, daß die vorliegende Erfindung nicht auf die polygonale Grundform eines gleichseitigen Dreiecks beschränkt ist, sondern daß gemäß einer Ausführungsform der Erfindung die Grundform auch ein Rechteck oder Quadrat sein kann, wie es aus Stand der Technik bekannt ist, wobei der Nebenschneidkantenverlauf jedoch im wesentlichen derselbe wäre wie bei einer dreieckigen Grundform. Dies würde lediglich bedeuten, daß der Winkel zwischen einer Hauptschneidkante und dem wesentlichen Verlauf der Nebenschneidkante in etwa um 15° größer wäre, so daß der Schneideinsatz das Werkstück mit einem kleineren Anstellwinkel bearbeiten würde.

Besonders bevorzugt ist eine Ausführungsform der vorliegenden Erfindung, bei welcher der Schneideinsatz eine positive Spangeometrie hat, d.h. bei welcher die obere Fläche des Schneideinsatzes größer ist als seine Unterseite, so daß die Seitenflächen, welche Oberseite und Unterseite miteinander verbinden, mit der Oberseite einen Winkel von weniger als 90 ° einschließen.

Weitere Vorteile, Merkmale und Anwendungsmöglichkeiten der vorliegenden Erfindung ergeben sich aus der folgenden Beschreibung einer bevorzugten Ausführungsform und der dazugehörigen Figuren.
- Figuren 1 und 2: zeigen zwei verschiedene Schneideinsätze, wie sie aus dem Stand der Technik bekannt sind,
- Figur 3: zeigt die aus dem Stand der Technik bekannten Schneideinsätze nach gur 1 und 2 im Eingriff an einem Werkstück,
- Figur 4: zeigt einen Schneideinsatz gemäß einer bevorzugten Ausführungsform der vorliegenden Erfindung,
- Figur 5: zeigt zwei der aus Figur 4 bekannten Schneideinsätze im Einsatz an einem Werkstück und
- Figur 6: zeigt zusätzlich zu den Schneideinsätzen gemäß Figur5 alternative, gestrichelt ergänzte Schneideinsätze gemäß der vorliegenden Erfindung mit einer quadratischen Grundform.

Man erkennt in Figur 1 einen ersten Schneideinsatz 1 nach dem Stand der Technik in einer Draufsicht von oben. Die sichtbare Oberseite des Schneideinsatzes bildet eine Spanfläche. Teile der Seiten des in Figur 1 dargestellten Schneideinsatzes bilden Hauptschneidkanten h1, während die abgeschnittenen Ecken Nebenschneidkanten n1 bilden.

Die Hauptschneidkanten h1 gehen über einen kleinen Eckradium r1 in die Nebenschneidkanten n1 über, wobei die Nebenschneidkanten definiert werden durch einen konkaven Abschnitt mit dem Krümmungsradius R1 und einem anschließenden konvexen Abschnitt mit dem Krümmungsradius r, der den Übergang zur nächsten Seite des Quadrates bildet. Markante Punkte des Schneidkantenverlaufs sind mit den Buchstaben A, B und C bezeichnet, wobei die Hauptschneidkante h1 durch den Abschnitt a1 - b1 definiert wird und die Nebenschneidkante durch den Abschnitt b1 - c1 definiert wird. Wie anschließend noch in Verbindung mit Figur 3 erläutert wird, sind beim Gebrauch des Schneideinsatzes 1 jeweils ein Paar von Schneidkanten h1, n1 aktiv, die durch die erwähnten Punkte A1, B1 und C1 begrenzt werden. Die Folge A1, B1, C1 wiederholt entgegen dem Uhrzeigersinn an dem Schneideinsatz insgesamt viermal, so daß der Schneideinsatz vier Hauptschneiden h1 und vier Nebenschneiden n1 hat, im Gebrauch also insgesamt in vier verschiedenen Positionen arbeiten kann.

Der in Figur 2 dargestellte Schneideinsatz 2, der ebenfalls zum Stand der Technik gehört, ist dem Schneideinsatz 1 aus Figur 1 relativ ähnlich, wobei der wesentliche Unterschied nur darin besteht, daß die Nebenschneidkante n2 des Schneideinsatzes 2 einen wesentlich größeren Krümmungsradius R aufweist als die entsprechende Nebenschneidkante n1 des Schneideinsatzes 1 und wobei die im Gebrauch aktiven Schneidkanten h2 und n2 im Uhrzeigersinn aneinander angrenzen, d.h. es kommen jeweils die Abschnitte a2 - b2 - c2 mit einem Werkstück in Eingriff, wobei sich die genannten Punkte in diesem Fall entlang des Schneideinsatzes im Uhrzeigersinn viermal wiederholen.

Es versteht sich, daß der "Drehsinn" der Schneideinsätze 1 und 2 auch ebenso gut vertauscht sein könnte, indem die jeweils aktiven Schneidkanten h1, n1 im Uhrzeigersinn aufeinanderfolgen, während die aktiven Schneidkanten h2, n2 des Schneideinsatzes 2 entgegen dem Uhrzeigersinn aufeinanderfolgen würden. Dies entspricht einfach den Spiegelbildern (mit der Spiegelebene parallel zur Papierebene) der Figuren 1 und 2.

Der Sinn und Zweck der genannten Schneidkantenanordnungen und -formen wird am besten deutlich anhand der Figur 3, welche die beiden Schneideinsätze 1 und 2 nach dem Stand der Technik im Einsatz an einem Werkstück zeigt.

Das Werkstück W, welches in Figur 3 im Schnitt schraffiert dargestellt ist, kann zum Beispiel ein hohlzylindrisches Werkstück sein, von welchem hier nur ein Abschnitt aus der Zylinderwand im Schnitt dargestellt ist. Es versteht sich, daß die relativen Abmessungen, insbesondere die Wandstärke, nicht unbedingt in realistischen Maßstäben wiedergegeben sind. Wesentlich ist lediglich, daß eine Bearbeitung der zylindrischen Wand des Werkstückes W sowohl von innen als auch von außen erfolgt, wobei die Wandstärke D des Rohlings auf d des fertigen Werkstückes reduziert wird. Dies erfolgt mit den beiden genannten Schneideinsätzen durch gleichzeitige Grob- und Feinbearbeitung, wobei nicht notwendigerweise beide Schneideinsätze gleichzeitig zum Einsatz kommen müssen, sondern auch nacheinander an das Werkstück zugestellt werden können. Das Werkstück rotiert dabei um seine (hier nicht dargestellte) Zylinderachse, die beispielsweise in der Nähe des unteren Randes der Figur 3 liegen könnte. Demnach schneidet der unten dargestellte Schneideinsatz 2 die Innenwand des Werkstückes W, während der Schneideinsatz 1 die Außenwand bearbeitet. Die Bearbeitung erfolgt durch beide Schneideinsätze jeweils durch Grobbearbeitung mit einem relativ großen Zerspanungsvolumen durch die Hauptschneidkanten h1 bzw. h2 und in kurzem Abstand dahinter schließt sich eine Feinbearbeitung (Schlichten) durch die Nebenschneidkanten n1 bzw. n2 an, bei welcher nur noch relativ wenig Material von der Wand des hohlzylindrischen Werkstückes W abgetragen wird. Bei vielen durch Drehen hergestellten, hohlzylindrischen Bauteilen besteht der Wunsch, daß die Innenfläche und die Außenfläche des fertigen Werkstückes unterschiedliche Oberflächeneigenschaften aufweisen, insbesondere also zum Beispiel die Innenfläche sehr glatt sein soll, während die Außenfläche bewußt eine größere Rautiefe haben soll.

Dies wird nach dem Stand der Technik dargestellten, verschiedenen Schneideinsätzen 1 und 2 erreicht, indem die Nebenschneidkante n in ihrem aktiven, mit dem Werkstück W in Eingriff kommenden Bereich einen relativ kleinen Krümmungsradius r aufweist, so daß bei einem gegebenen axialen Vorschub des Schneideinsatzes relativ zum Werkstück (in Figur 3 nach links) notwendiger aufgrund des relativ kleinen Schneideckenradius r eine gewisse, wohldefinierte, konstante Oberflächenrauhigkeit auf der Außenseite des Werkstückes W erzeugt wird.

Demgegenüber weist die Nebenschneidkante n2 einen wesentlich größeren Krümmungsradius R auf, der auf der Innenseite des hohlzylindrischen Werkstückes W bei gegebenem axialem Vorschub, der beispielsweise mit dem axialen Vorschub des Schneideinsatzes 1 identisch ist, eine sehr glatte Oberfläche erzeugt. Auch hier wird der Hauptteil der Zerspanungsarbeit durch den Hauptschneidkantenabschnitt h2 geleistet.

Figur 3 zeigt einen erfindungsgemäßen Schneideinsatz, welcher die Eigenschaften beider Schneideinsätze 1 und 2 in sich vereint, so daß man nicht mehr zwischen den zwei verschiedenen Schneideinsatztypen unterscheiden muß, sondern lediglich einen einzigen Schneideinsatztypen für denselben Zweck verwenden kann, der zudem noch mehr effektiv nutzbare Schneidkanten aufweist.

Man erkennt in Figur 4 einen Schneideinsatz 3 in einer Ansicht von oben, der die Grundform eines gleichseitigen Dreiecks hat, dessen Spitzen abgeschnitten sind.

Auch bilden die Seiten des Dreiecks Hauptschneidkanten h3 bzw. h4 und durch die abgeschnittenen Ecken werden Nebenschneidkanten n3, n4 definiert. In diesem Fall sind jedoch die verschiedenen Hauptschneidkanten h3 und h4 ebenso wie die unterschiedlichen Nebenschneidkanten n3, n4 an ein und demselben Schneideinsatz angeordnet, indem die entlang der abgeschnittenen Eckbereiche der dreieckigen Grundform verlaufenden Nebenschneidkanten durch eine bestimmte Folge konvexer und konkaver Schneidkantenabschnitte definiert werden.

Für den Vergleich mit dem Schneideinsatz 1 betrachte man beispielsweise die Folge der durch die Punkte A3, 4 - B4 - C4 definierten Abschnitte, d.h. die Hauptschneidkante h4 und die Nebenschneidkante n4. Die Hauptschneidkante h4 wird durch eine gerade Dreiecksseite definiert mit einem kleinen Übergangradius r1 am Punkt B4 in dem Bereich der Nebenschneidkante n4. Dort wird die Nebenschneidkante zunächst durch einen konkaven Abschnitt mit dem Radius R₁ gebildet, welcher dem Radius r1 des Schneideinsatzes 1 nach dem Stand der Technik entspricht, gefolgt von einem konvexen Abschnitt im Bereich des Punktes C4 mit dem Krümmungsradius r. Dies entspricht dem Punkt C1 mit im wesentlichen dem gleichen Radius bei dem Schneideinsatz 1 nach dem Stand der Technik.

Geht man umgekehrt von der anderen Seite des Schneideinsatzes 3 aus, wieder beginnend bei dem Punkt A3, 4 im Uhrzeigersinn zum Punkt B3 und C3, d.h. in der Abfolge der Hauptschneidkante h3 und der Nebenschneidkante n3, so erkennt man, daß dieser Verlauf im wesentlichen dem Schneidkantenverlauf h2, n2 des Schneideinsatzes 2 entspricht. Auch hier geht die Hauptschneidkante h3 entlang eines kleinen Eckradius r2 im Punkt B3 in die Nebenschneidkante n3 über, die zunächst von einem konkaven Abschnitt mit dem Radius R2 und einem anschließenden konvexen Abschnitt mit dem Radius R gebildet wird und etwa in Punkt C3 endet. Die Punkte C3 und C4 sind wiederum durch einen konkaven Abschnitt mit dem Radius R3 miteinander verbunden, der lediglich einen gewissen Abstand zwischen den Enden der Nebenschneidkanten n3 bzw. n4 bewirken soll.

Insgesamt wird die Nebenschneidkante, ausgehend von der einen Hauptschneikante h3 definiert durch eine Folge konvexer und konkaver Abschnitte, beginnend mit
a) einem konvexen Abschnitt mit dem Radius r2, einem konkaven Abschnitt mit dem Radius R2, einem konvexen Abschnitt mit dem Radius R, einem konkaven Abschnitt mit dem Radius R3, einem konvexen Abschnitt mit dem Radius r, einem konkaven Abschnitt mit dem Radius R1 und einem konvexen Abschnitt mit dem Radius r1 als Übergang zur nächstbenachbarten Hauptschneidkante h4.

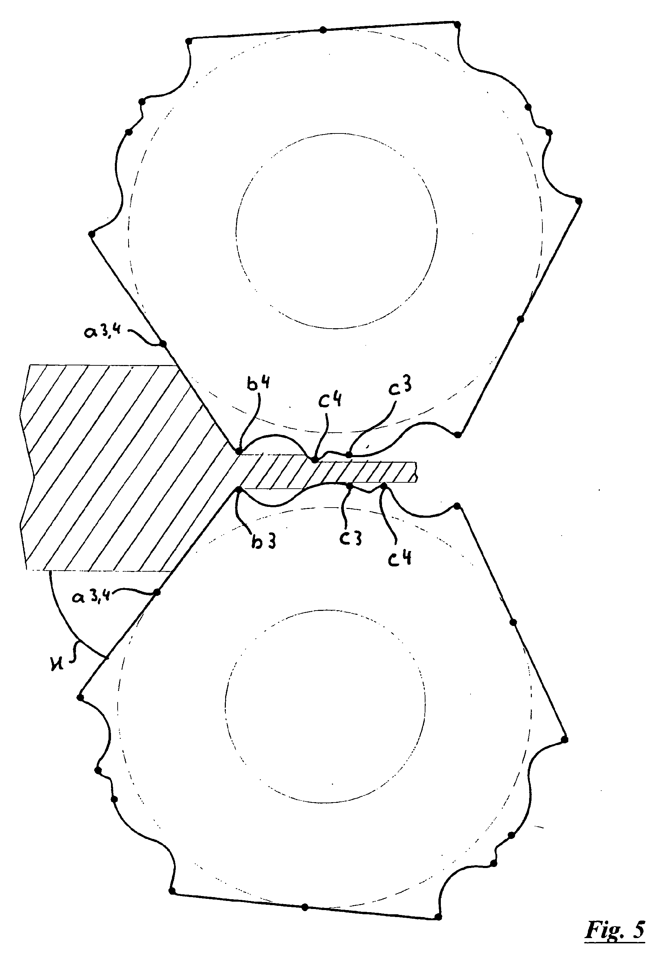

Effektiv besteht diese Nebenschneidkante jedoch aus zwei getrennten Nebenschneidkantenabschnitten n3 b zw. n4, von denen im Gebrauch des Schneideinsatzes jeweils nur einer mit dem Werkstück in Eingriff kommt. Die Arbeitsweise und Anordnung des Schneideinsatzes im Betrieb ist in Figur 5 anschaulich wiedergegeben.

Figur 5 ist eine Ansicht ähnlich der Figur 3, wobei in diesem Fall jedoch nicht zwei verschiedene Schneideinsätze verwendet werden, sondern ein und derselbe Schneideinsatz 3 verwendet wird, jedoch in unterschiedlicher Orientierung relativ zum Werkstück W zugestellt wird. Daraus ergibt sich, daß bei dem obere Schneideinsatz 3 in der dargestellten Orientierung die Hauptschneidkante h4 und die Nebenschneidkante n4 aktiv sind, wobei die Hauptschneidkante h4 ebenso wie im Beispiel der Figur 3 den Hauptteil der Zerspanungsarbeit leistet und die Nebenschneidkante n4 eine Feinbearbeitung der gedrehten Fläche gewährleistet. Bei dem unteren Schneideinsatz 3 sind die Hauptschneidkante h3 und die Nebenschneidkante n3 mit dem Werkstück W in Eingriff, wobei das Werkstück wiederum, wie auch im Fall der Figur 3, ein hohlzylindrisches Werkstück ist, dessen Achse am unteren Rand oder unterhalb des unteren Randes der Figur horizontal verläuft und hier nicht dargestellt ist.

Der obere Schneideinsatz 3 erzeugt wegen des kleinen Krümmungsradius r im Bereich C4 der Nebenschneidkante n4 eine wohldefinierte Oberflächenrauhigkeit, während der untere Schneideinsatz 3 durch seine Nebenschneidkante n3, die einen großen Krümmungsradius aufweist, eine sehr glatte Oberfläche auf der Innenseite des hohlzylindrischen Werkstücks erzeugt. Auch hier sind die relativen Maße und Wandstärken des Werkstückes W nicht unbedingt maßstabsgetreu wiedergegeben.

Im Unterschied zu den Schneideinsätzen der Figuren 1 bis 3, bei welchen eine Hauptschneidkante jeweils nur auf einer Seite des Punktes A1 bzw. A2 gebildet wurde, werden entlang der im wesentlichen geraden Dreiecksseiten des erfindungsgemäßen Schneideinsatzes die Abschnitte beiderseits des Punktes A3, 4, welcher in analoge Weise den Punkten A1 bzw. A2 entspricht, als Hauptschneidkanten h3 bzw. h4 genutzt, und zwar einmal in der Einspannung mit der Orientierung entsprechend dem unteren Schneideinsatz 3 und einmal in der Einspannung entsprechend der Orientierung des oberen Schneideinsatzes 3. In jeder der genannten Orientierungen kann der Schneideinsatz dreimal gewendet werden und zusätzlich kann der obere gegen den unteren Schneideinsatz jeweils ausgetauscht werden, so daß jeder einzelne Schneideinsatz insgesamt sechsmal verwendet werden kann, bis die jeweiligen Schneidkanten h3, n3 bzw. h4, n4 allesamt verschlissen sind.

Gegenüber dem Stand der Technik hat dieser Schneideinsatz daher den Vorteil, daß zum einen bei der Lagerhaltung und auch bei der Montage nicht zwei verschiedene Schneideinsätze unterschieden werden müssen, sondern ein einheitlicher Schneideinsatz beschafft und verwendet werden kann, wobei außerdem noch jeder Schneideinsatz eine um 50% verbesserte Ausnutzung erfährt, im übrigen aber in fünf völlig gleicher Weise arbeiten kann, wie die Schneideinsätze 1 und 2 nach dem Stand der Technik. Allein aufgrund der höhern Schneidkantenzahl ergibt sich Verbesserung der Wirtschaftlichkeit um 50%, die zusätzlich noch durch die vereinfachte Lagerhaltung gesteigert wird.

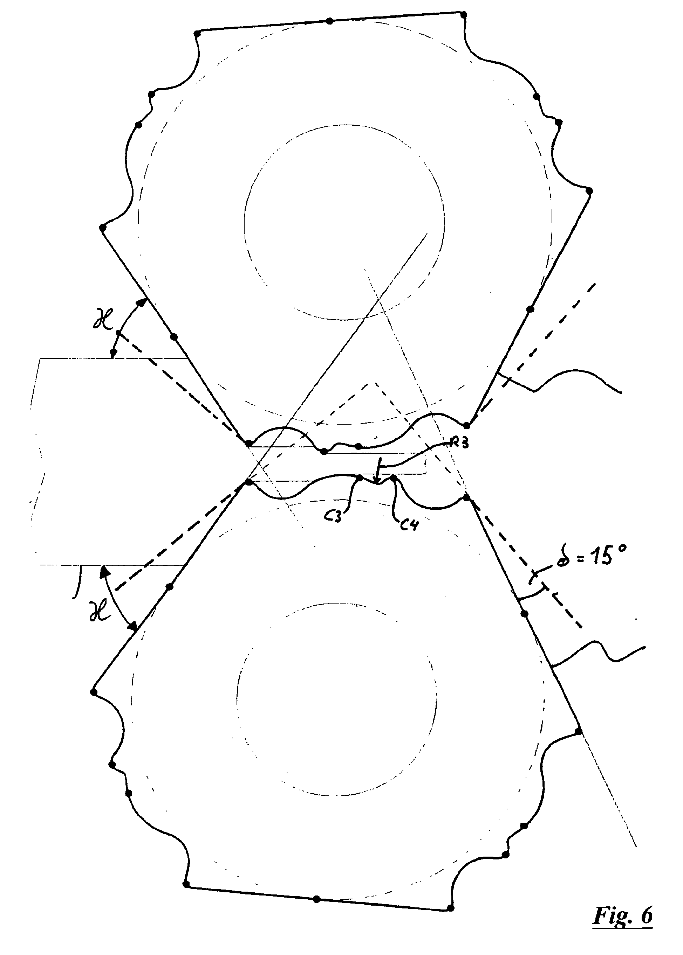

Darüber hinaus ist es selbstverständlich möglich, die erfindungsgemäße Ausgestaltung der Nebenschneidkanten auch an einem Schneideinsatz zu realisieren, der eine vierseitig bzw. quadratische Grundform hat. Dies wird in Figur 6 nur schematisch angedeutet. In Figur 6 sind zusätzlich zu den Schneideinsätzen mit dreieckiger Grundform in gestrichelten Linien die Konturen eines entsprechenden Schneideinsatzes mit quadratischer bzw. rechteckiger Grundform eingezeichnet. Man er-kennt, daß man an den abgeschnittenen Spitzen eines entsprechenden Quadrats exakt denselben Verlauf der Nebenschneidkanten realisieren kann wie im Falle der Schneideinsätze mit dreieckiger Grundform. Lediglich der Anstellwinkel ?, der für die Schneideinsätze mit dreieckiger Grundform in der dargestellten Orientierung circa 55° beträgt, würde sich dann auf etwa 40° reduzieren. Indem jedoch beispielsweise der konkave Abschnitt mit dem Radius R3 zwischen den Punkten C3 und C4 noch etwas verlängert wird, wobei die verbleibenden Abschnitte etwas verkürzt werden könnten, läßt sich auch bei einem quadratischen Schneideinsatz der Anstellwinkel ? noch vergrößern, ohne daß die Gefahr besteht, daß neben jeweils einer der Nebenschneidkanten n3, n4 auch noch die nachfolgende, nicht aktive Schneidkante n4 bzw. n3 mit der Werkstückoberfläche in Eingriff tritt.

Zweckmäßigerweise werden die erfindungsgemäßen Schneideinsätze als positive Schneideinsätze ausgebildet, d.h. die (nicht dargestellte) untere Fläche des Schneideinsatzes wird etwas kleiner ausgeführt als die sichtbare obere Seite, so daß die Seitenflächen, welche Unter- und Oberseite miteinander verbinden, mit der Oberseite einen Winkel von weniger als 90° einschließen. Es versteht sich, daß zusätzlich auch Spanformungseinrichtungen, wie Spanmulden, Spanbrecher etc. entlang der Schneidkanten h3, h4 bzw.n3, n4 auf der oberen Fläche der Schneideinsätze 3 vorgesehen werden könnten.

Jeder der Schneideinsätze weist außerdem eine zentrale Befestigungsbohrung B auf, die zur Befestigung des Schneideinsatzes an einem Schneideinsatzträger von einer entsprechenden Befestigungsschraube durchgriffen wird.

Die Seitenflächen unterhalb der jeweiligen Hauptschneidkanten h3, h4 bilden zusammen mit der Unterseite Anlageflächen an einem entsprechenden Schneideinsatzhalter, der eine komplementäre Aussparung aufweist, welche in der dargestellten bevorzugten Ausführungsform eine sehr gute Positioniergenauigkeit gewährleistet.

Für Zwecke der ursprünglichen Offenbarung wird darauf hingewiesen, daß sämtliche Merkmale, wie sie sich aus der vorliegenden Beschreibung, den Zeichnungen und den Ansprüchen für einen Fachmann erschließen, auch wenn sie konkret nur im Zusammenhang mit bestimmten weiteren Merkmalen beschrieben wurden, sowohl einzeln als auch in beliebigen Zusammenstellungen mit anderen der hier offenbarten Merkmale oder Merkmalsgruppen kombinierbar sind, soweit dies nicht ausdrücklich ausgeschlossen wurde oder technische Gegebenheiten derartige Kombinationen Unmöglich oder sinnlos machen. Auf die umfassende, explizite Darstellung sämtlicher denkbarer Merkmalskombinationen wird hier nur der Kürze und der Lesbarkeit der Beschreibung wegen verzichtet.

## Patentansprüche

1. Wendeschneideinsatz zum Drehen mit einer polygonalen Grundform, die definiert wird durch eine obere Seite mit polygonalem Umriß, eine hierzu in etwa parallele Unterseite, umlaufende Seitenflächen, welche die Ober- und die Unterseite miteinander verbinden, wobei der Schnitt der Seitenflächen mindestens mit der Oberseite Schneidkanten bildet, die aus Hauptschneidkanten und Nebenschneidkanten bestehen, wobei die im wesentlichen polygonale Umrißform durch eine mindestens dreieckige Grundform definiert wird, die abgeschnittene Eckbereich hat, wobei die Hauptschneidkanten durch die Seiten der polygonalen Grundform definiert werden, und die Nebenschneidkanten durch die abgeschnittenen Eckbereiche definiert werden und wobei die Nebenschneidkanten mindestens einen konkaven und mindestens einen konvexen Schneidkantenabschnitt aufweisen, **dadurch gekennzeichnet, daß** die Nebenschneidkanten, ausgehend von einem kleinen konvexen Übergangsradius (r1) am Übergang von einer ersten an die Nebenschneidkante angrenzende Hauptschneidkante den folgenden Verlauf hat:
a) konkav mit einem Radius R₁
b) konvex mit einem Radius r
c) konkav mit einem mittleren Radius R₃
d) konvex mit einem Radius R
e) konkav mit einem Radius R₂
und mit einem anschließenden konvexen Übergang zu der anderen angrenzenden Hauptschneidkante mit einem kleinen Übergangsradius r₂,

2. Wendeschneideinsatz nach Anspruch 1, **dadurch gekennzeichnet, daß** die folgende weitere Randbedingung gilt: R > r, r1, r₂.

3. Wendeschneideinsatz nach Anspruch 2, **dadurch gekennzeichnet, daß** R mindestens das Zweifache von 2r, vorzugsweise das Dreifache von r beträgt und insbesondere zwischen 4r und 8r liegt.

4. Wendeschneideinsatz nach Anspruch 2 oder 3, wobei r1 ungefähr gleich r₂ ist und r1, r₂ = r sind, wobei r1 und r₂ insbesondere im Bereich zwischen etwa 0,2 r bis 0,8r liegen.

5. Wendeschneideinsatz nach einem der Ansprüche 1 bis 4, **dadurch gekennzeichnet, daß** die konkaven Radien R₁, R₂ deutlich größer sind als r1, r₂ und vorzugsweise mindestens das Dreifache der Radien r1, r₂ betragen.

6. Wendeschneideinsatz nach einem der Ansprüche 1 bis 5, **dadurch gekennzeichnet, daß** der Radius R₃ im Mittel etwa 2 x r beträgt.

7. Wendeschneideinsatz nach einem der Ansprüche 1 bis 6, **dadurch gekennzeichnet, daß** der Radius r im Bereich zwischen 0,1 mm und 0,6 mm,
der Radius R im Bereich zwischen 0,5 mm und 3 mm, die Radien R₁, R₂ zwischen etwa 0,4 mm und 2 mm und der Radius R₃ im Mittel zwischen etwa 0,2 und 0,8 mm liegen.

8. Wendeschneideinsatz nach einem der Ansprüche 1 bis 7, **dadurch gekennzeichnet, daß** die Konvexbereiche der Nebenschneidkanten mit den Radien R und r, vom Zentrum des Schneideinsatzes aus gesehen über eine gerade Verbindungslinie zwischen den Übergangsecken zu den benachbarten Hauptschneidkanten hinausragen, während mindestens Teile der konkaven Schneidkantenabschnitte mit den Radien R₁, R₂ innerhalb dieser Verbindungslinie liegen.

9. Wendeschneideinsatz nach einem der Ansprüche 1 bis 8, **dadurch gekennzeichnet, daß** die polygonale Grundform einem gleichseitigen Dreieck entspricht.

10. Wendeschneideinsatz nach einem der Ansprüche 1 bis 8, **dadurch gekennzeichnet, daß** die polygonale Grundform einem Rechteck, insbesondere einem Quadrat, entspricht.

11. Wendeschneideinsatz nach einem der Ansprüche 1 bis 10, **dadurch gekennzeichnet, daß** er eine positive Spangeometrie hat, indem die Unterseite eine kleinere Fläche hat als die Oberseite, so daß die Seitenflächen mit der Oberseite einen Winkel von weniger als 90° einschließen.

## Claims

1. An indexable cutting bit for turning of a polygonal basic shape which is defined by an upper side of a polygonal contour, a lower side which is substantially parallel thereto, peripherally extending side faces which connect the upper side and the lower side together, wherein the intersection of the side faces at least with the upper side defines cutting edges which comprise main cutting edges and secondary cutting edges, wherein the substantially polygonal contour shape is defined by an at least triangular basic shape which has cut-off corner regions, wherein the main cutting edges are defined by the sides of the polygonal basic shape and the secondary cutting edges are defined by the cut-off corner regions and wherein the secondary cutting edges have at least one concave and at least one convex cutting edge portion, **characterised in that** the secondary cutting edge, starting from a small convex transition radius (r1) at the transition of a first main cutting edge adjacent to the secondary cutting edge, is of the following configuration:
a) concave with a radius R₁,
b) convex with a radius r,
c) concave with a mean radius R₃,
d) convex with a radius R, and
e) concave with a radius R₂,
and with a subsequent convex transition to the other adjoining main cutting edge with a small transition radius r₂.

2. An indexable cutting bit according to claim 1 **characterised in that** the following further boundary condition applies: R > r, r1, r₂.

3. An indexable cutting bit according to claim 2 **characterised in that** R is at least twice 2r, preferably three times r and in particular is between 4r and 8r.

4. An indexable cutting bit according to claim 2 or claim 3 wherein r1 is approximately equal to r₂ and r1, r₂ = r, wherein r1 and r₂ are in particular in the range between about 0.2r and 0.8r.

5. An indexable cutting bit according to one of claims 1 to 4 **characterised in that** the concave radii R₁, R₂ are markedly larger than r₁, r₂ and are preferably at least three times the radii r1, r₂.

6. An indexable cutting bit according to one of claims 1 to 5 **characterised in that** the radius R₃ is on average about 2 x r.

7. An indexable cutting bit according to one of claims 1 to 6 **characterised in that** the radius r is in the range of between 0.1 mm and 0.6 mm, the radius R is in the range of between 0.5 mm and 3 mm, the radii R₁, R₂ are between about 0.4 mm and 2 mm and the radius R₃ is on average between about 0.2 and 0.8 mm.

8. An indexable cutting bit according to one of claims 1 to 7 **characterised in that** the convex regions of the secondary cutting edges with the radii R and r, viewed from the centre of the cutting bit, project beyond a straight connecting line between the transitional corners to the adjacent main cutting edges, while at least parts of the concave cutting edge portions with the radii R₁, R₂ are within said connecting line.

9. An indexable bit according to one of claims 1 to 8 **characterised in that** the polygonal basic shape corresponds to an equilateral triangle.

10. An indexable cutting bit according to one of claims 1 to 8 **characterised in that** the polygonal basic shape corresponds to a rectangle, in particular a square.

11. An indexable cutting bit according to one of claims 1 to 10 **characterised in that** it is of a positive chip geometry by the lower side being of a smaller area than the top side so that the side faces include an angle of less than 90° with the top side.

## Revendications

1. Elément rapporté de coupe amovible destiné au tournage, lequel possède une forme de base polygonale qui est définie par un côté supérieur à contour polygonal, un côté inférieur sensiblement parallèle au côté supérieur, des surfaces latérales périphériques qui relient le côté supérieur et le côté inférieur, la vue en coupe des surfaces latérales formant au moins avec le côté supérieur des arêtes de coupe qui sont constituées d'arêtes de coupe principales et d'arêtes de coupe secondaires, la forme sensiblement polygonale du contour étant définie par une forme de base au moins triangulaire qui possède des régions de coin découpées, les arêtes de coupe principales étant définies par les côtés de la forme de base polygonale, et les arêtes de coupe secondaires étant définies par les régions de coin découpées et les arêtes de coupe secondaires comportant au moins une portion d'arête de coupe concave et au moins une portion d'arête de coupe convexe, **caractérisé en ce que** les arêtes de coupe secondaires ont la forme suivante en partant d'un petit rayon de transition convexe (r₁) au niveau de la transition d'une première arête de coupe principale avec l'arête de coupe secondaire :
a) une concavité de rayon R₁
b) une convexité de rayon r
c) une concavité de rayon médian R₃
d) une convexité de rayon R
e) une concavité de rayon R₂
et une transition convexe de raccordement à l'autre arête de coupe principale adjacente de petit rayon de transition r₂.

2. Elément rapporté de coupe amovible selon la revendication 1, **caractérisé par** une autre condition secondaire suivante : R > r, r₁, r₂.

3. Elément rapporté de coupe amovible selon la revendication 2, **caractérisé en ce que** R est égal à au moins deux fois 2r, avantageusement trois fois r, et est notamment compris entre 4r et 8r.

4. Elément rapporté de coupe amovible selon la revendication 2 ou 3, dans lequel r₁ est à peu près égal à r₂ et r₁ et r₂ sont égaux à r, r₁ et r₂ étant notamment compris entre 0,2 r et 0,8 r.

5. Elément rapporté de coupe amovible selon l'une des revendications 1 à 4, **caractérisé en ce que** les rayons R₁, R₂ des concavités sont nettement supérieurs à r₁, r₂ et sont avantageusement égaux à au moins trois fois les rayons r₁, r₂.

6. Elément rapporté de coupe amovible selon l'une des revendications 1 à 5, **caractérisé en ce que** le rayon R₃ est égal en moyenne à environ 2 x r.

7. Elément rapporté de coupe amovible selon l'une des revendications 1 à 6, **caractérisé en ce que** le rayon r est compris entre 0,1 mm et 0,6 mm, le rayon R est compris entre 0,5 mm et 3 mm, les rayons R₁, R₂ sont compris entre 0,4 mm et 2 mm environ et le rayon R₃ est compris en moyenne entre 0,2 mm et 0,8 mm environ.

8. Elément rapporté de coupe amovible selon l'une des revendications 1 à 7, **caractérisé en ce que** les régions convexes des arêtes de coupe secondaire de rayons R et r font saillie, lorsque l'on observe depuis le centre de l'élément rapporté de coupe, au-dessus d'une ligne de liaison rectiligne entre les coins de transition vers les arêtes de coupe principales adjacentes, tandis qu'au moins des parties des portions d'arête de coupe concaves de rayons R₁, R₂ se trouvent en dedans de cette ligne de liaison.

9. Elément rapporté de coupe amovible selon l'une des revendications 1 à 8, **caractérisé en ce que** la forme de base polygonale correspond à un triangle équilatéral.

10. Elément rapporté de coupe amovible selon l'une des revendications 1 à 8, **caractérisé en ce que** la forme de base polygonale correspond à un rectangle, notamment à un carré.

11. Elément rapporté de coupe amovible selon l'une des revendications 1 à 10, **caractérisé en ce qu'**il a une géométrie de coupe positive en raison du fait que le côté inférieur a une surface qui est plus petite que celle du côté supérieur de sorte que les surfaces latérales forment avec le côté supérieur un angle inférieur à 90°.
